# EUROPÄISCHE PATENTANMELDUNG

(11) **EP 4 729 270 A1**
(43) Veröffentlichungstag der Anmeldung: **22.04.2026**
(21) Anmeldenummer: 25208224.3
(22) Anmeldetag: 13.10.2025
(51) Int. Cl.: B29C 45/17, B29C 45/33, B29C 45/34

(54) **REINIGUNG EINES SPRITZGIESSWERKZEUGES**

(30) Priorität: 15.10.2024 DE 102024129943; 01.11.2024 DE 102024131951
(71) Anmelder: MHT Mold & Hotrunner Technology AG, 65239 Hochheim (DE)
(72) Erfinder: Tilsner, Christian, 64331 Weiterstadt (DE); van der Velde, Dominik, 65719 Hofheim (DE); Süß, Peter, 65239 Hochheim (DE)
(74) Vertreter: WSL Patentanwälte Partnerschaft mbB

(57) **Zusammenfassung**

Die vorliegende Erfindung betrifft ein Spritzgießwerkzeug zur Herstellung zumindest eines Formteils in einem Formraum, wobei das Spritzgießwerkzeug zumindest zwei Werkzeugelemente aufweist, die relativ zueinander zwischen einer offenen Position und einer geschlossenen Position bewegbar sind und unter Ausbildung zumindest eines Entlüftungsspaltes miteinander in Kontakt stehen, wobei in der geschlossenen Position von den zumindest zwei Werkzeugelementen der Formraum zumindest abschnittsweise umschlossen wird und der Entlüftungsspalt derart mit dem Formraum verbunden ist und einen Querschnitt aufweist, dass der Entlüftungsspalt eine Entlüftung des Formraums ermöglicht und ein Ausdringen einer plastifizierten Schmelze aus dem Formraum verhindert, und wobei in der offenen Position ein in dem Formraum hergestelltes Formteil aus dem Spritzgießwerkzeug entnommen werden kann. Die vorliegende Anmeldung betrifft darüber hinaus ein Verfahren zur Reinigung eines Spritzgießwerkzeuges der zuvor genannten Art.

## Beschreibung

Die vorliegende Erfindung betrifft ein Spritzgießwerkzeug zur Herstellung zumindest eines Formteils in einem Formraum, wobei das Spritzgießwerkzeug zumindest zwei Werkzeugelemente aufweist, die relativ zueinander zwischen einer offenen Position und einer geschlossenen Position bewegbar sind und unter Ausbildung zumindest eines Entlüftungsspaltes miteinander in Kontakt stehen, wobei in der geschlossenen Position von den zumindest zwei Werkzeugelementen der Formraum zumindest abschnittsweise umschlossen wird und der Entlüftungsspalt derart mit dem Formraum verbunden ist und einen Querschnitt aufweist, dass der Entlüftungsspalt eine Entlüftung des Formraums ermöglicht und ein Ausdringen einer plastifizierten Schmelze aus dem Formraum verhindert, und wobei in der offenen Position ein in dem Formraum hergestelltes Formteil aus dem Spritzgießwerkzeug entnommen werden kann. Die vorliegende Anmeldung betrifft darüber hinaus ein Verfahren zur Reinigung eines Spritzgießwerkzeuges der zuvor genannten Art.

Das Spritzgießen ist eines der wichtigsten Verfahren zur Herstellung von Kunststoffformteilen. Dabei wird die im Allgemeinen ursprünglich als Pulver oder Granulat vorliegende Formmasse erhitzt, plastifiziert und als plastifizierte Schmelze unter hohem Druck in einen Formraum eines entsprechenden Spritzgießwerkzeuges gedrückt. Die Formmasse erstarrt in dem Spritzgießwerkzeug und wird anschließend aus dem geöffneten Spritzgießwerkzeug als Formteil entnommen. Bei dem Formteil kann es sich um ein fertiges Formteil oder einen Vorformling handeln, der anschließend in einem weiteren Prozessschritt nachbearbeitet wird. Beispielsweise werden handelsübliche PET-Flaschen durch Streckblasformen eines Hohlkörpervorformlings hergestellt.

Zur Herstellung eines Formteils weist ein Spritzgießwerkzeug typischerweise eine Kavitätenplatte mit zumindest einem Kavitäteneinsatz und eine Kernplatte mit zumindest einem Formkern auf, wobei die Kavitätenplatte und die Kernplatte derart relativ zueinander bewegbar sind, dass sie zwischen einer offenen Position und einer geschlossenen Position hin- und her bewegt werden können. In der geschlossenen Position ist der Formkern in dem Kavitäteneinsatz angeordnet, sodass ein Formraum gebildet wird, in welchem die plastifizierte Schmelze eingeleitet wird. Eine Innenkontur des Kavitäteneinsatzes entspricht dabei zumindest abschnittsweise der Außenkontur des herzustellenden Formteils, während eine Außenkontur des Formkerns zumindest abschnittsweise der Innenkontur des herzustellenden Formteils entspricht. In der offenen Position ist der Formkern hingegen nicht in dem Kavitäteneinsatz angeordnet, sodass das erstarrte Formteil aus dem Spritzgießwerkzeug entnommen werden kann.

Weiterhin weist ein Spritzgießwerkzeug häufig einen sogenannten Kernring auf, welcher den Formkern umschließt und den Formraum in Richtung der Kernplatte begrenzt. Der Kernring und der Formkern können einstückig oder als zwei separate Bauteile ausgebildet sein.

Des Weiteren weist ein typisches Spritzgießwerkzeug häufig einen Halsring auf, der einer exakten Anordnung des Formkerns in dem Kavitäteneinsatz in der geschlossenen Position dient und den Formraum abschließt. Dabei wird der Halsring entlang einer Längsachse des Spritzgießwerkzeuges zwischen der Kavitätenplatte und der Kernplatte so angeordnet, dass er die Anordnung aus Kavitäteneinsatz und Formkern ergänzt. Eine Innenkontur des Halsrings entspricht dabei einem Abschnitt der Außenkontur des herzustellenden Formteils und bildet damit ebenfalls einen Teil des Formraums für die plastifizierte Schmelze.

Bei der Herstellung von PET-Flaschen bildet der Halsring beispielsweise einen Gewindeabschnitt der späteren PET-Flasche aus. Ein solcher Gewindeabschnitt kann aufgrund von Hinterschneidungen nur aus dem Spritzgießwerkzeug entformt werden, wenn das hierfür formgebende Werkzeug, also der Halsring, mehrteilig ausgestaltet ist. Dazu besteht der Halsring typischerweise aus zwei sogenannten Halsbacken, die in der geschlossenen Position miteinander in Kontakt stehen und den Formraum abschließen. In der offenen Position des Spritzgießwerkzeuges können die Halsbacken hingegen auseinander bewegt werden, sodass das hergestellte Formteil entnommen werden kann. Werkzeugelemente im Sinne der vorliegenden Erfindung sind also neben dem Formkern und dem Kavitäteneinsatz beispielsweise auch Halsbacken eines Spritzgießwerkzeuges.

Zur Herstellung eines Formteils werden zunächst die Halsbacken des Halsrings miteinander in Kontakt gebracht und anschließend der Formkern mit den Halsbacken in der Kavität angeordnet, sodass ein geschlossener Formraum entsteht, der dem Einspritzdruck der plastifizierten Schmelze standhält. Bei dieser Anordnung handelt es sich um eine geschlossene Position des Spritzgießwerkzeuges im Sinne der vorliegenden Erfindung. Ist die Schmelze ausreichend erstarrt, werden die Halsbacken wieder auseinander und der Formkern aus dem Kavitäteneinsatz bewegt, sodass das Formteil entnommen werden kann. Bei dieser Anordnung handelt es sich um eine offene Position des Spritzgießwerkzeuges im Sinne der vorliegenden Erfindung.

Die genannten Prozessschritte, die einen Herstellungszyklus eines Formteils beschreiben, werden typischerweise innerhalb weniger Sekunden durchgeführt, sodass ein Herstellungszyklus innerhalb kürzester Zeit vielfach wiederholt wird. Während jedem Herstellungszyklus kann es vorkommen, dass kleine Partikel der Formmasse in dem Spritzgießwerkzeug, insbesondere in Spalten zwischen den Werkzeugelementen des Werkzeuges, die nicht unmittelbar mit der Schmelze in Kontakt kommen, verbleiben und sich diese mit der Zeit zusetzen. Weiter können kleine Partikel während des Spritzgießvorgangs auch durch die Entlüftung des Formraums in die Spalten eindringen.

Ein solcher Spalt befindet sich beispielsweise zwischen Stützring und Halsring, zwischen Kavitäteneinsatz und Halsring, zwischen Halsring und Formkern, zwischen dem Kernring und dem Halsring, zwischen dem Kernring und dem Formkern, sofern diese separat ausgebildet sind, oder zwischen den Halsbacken des Halsrings und ist so ausgestaltet, dass er in der geschlossenen Position des Werkzeuges zwar keine Schmelze aus dem Formraum entweichen lässt, allerdings der Entlüftung des Formraums dient. Ein Zusetzen dieses Spaltes, der auch als Entlüftungsspalt bezeichnet werden kann, führt also dazu, dass mittel- oder langfristig keine Luft mehr aus dem Formraum entweichen kann und der Spritzgießvorgang beeinträchtigt wird.

Daher ist eine Reinigung des Spritzgießwerkzeuges, insbesondere der Entlüftungsspalten zwischen den Werkzeugelementen erforderlich. Eine manuelle Reinigung ist jedoch umständlich und führt zu hohen Ausfallzeiten des Spritzgießwerkzeuges.

Aus dem Stand der Technik sind verschiedene Möglichkeiten zur Reinigung eines Spritzgießwerkzeuges bekannt. Eine Möglichkeit der Reinigung besteht beispielsweise in dem gezielten Überspritzen des Formraums. Hierzu werden die Werkzeugelemente in einer Reinigungsposition angeordnet, in welcher die Werkzeugelemente weiter voneinander beabstandet sind als in der geschlossenen Position. In diesen so entstehenden erweiterten Formraum wird Schmelze eingeleitet, die auch in die in der Reinigungsposition vergrößerten Entlüftungsspalten zwischen den Werkzeugelementen eindringen kann. Kleine Schmutzpartikel, die sich in den Spalten angesammelt haben, können an der Schmelze anhaften und gemeinsam mit dem erstarrten Formteil entnommen werden können. Die in diesen Reinigungszyklen hergestellten Formteile werden dann verworfen. Für dieses gezielte Überspritzen kann entweder eine spezielle Maschinensteuerung zum Einsatz kommen oder es werden zusätzliche Abstandshalter zwischen den Werkzeugelementen angeordnet, die ein Herausfließen der plastifizierten Schmelze verhindern.

In jedem Fall ist das gezielte Überspritzen des Formraums mit zusätzlichem Steuerungs- und Montageaufwand verbunden, sodass eine Reinigung des Spritzgießwerkzeuges bei dieser Variante ebenfalls mit entsprechenden Produktionsausfällen einhergeht.

Der vorliegenden Erfindung liegt daher die Aufgabe zugrunde, ein Spritzgießwerkzeug bzw. ein Reinigungsverfahren für ein Spritzgießwerkzeug bereitzustellen, mit welchem auf einfache Art und Weise ohne zusätzliche Bauteile eine möglichst vollständige und vorzugsweise gleichzeitige Reinigung aller Entlüftungsspalten gewährleistet wird.

Die der Erfindung zugrunde liegende Aufgabe wird durch ein Spritzgießwerkzeug der eingangs genannten Art gelöst, wobei das Spritzgießwerkzeug weiter eine Reinigungsstruktur aufweist, wobei die Reinigungsstruktur derart angeordnet und ausgebildet ist, dass über die Reinigungsstruktur ein Reinigungsfluid, vorzugsweise Druckluft, in den zumindest einen Entlüftungsspalt zwischen den Werkzeugelementen leitbar ist.

Erfindungsgemäß ist also vorgesehen, dass ein Reinigungsfluid über eine Reinigungsstruktur in den zumindest einen Entlüftungsspalt oder vorzugsweise in mehrere Entlüftungsspalten gleichzeitig vordringt, um anhaftende Schmutzpartikel zu entfernen.

Dies bietet den Vorteil, dass das Reinigungsfluid mit allen Spalten zwischen den Werkzeugelementen des Spritzgießwerkzeuges in Kontakt kommt und damit eine möglichst vollständige Reinigung des Spritzgießwerkzeuges erfolgt.

Die Reinigungsstruktur ist dabei so ausgestaltet und angeordnet, dass sichergestellt ist, dass in der geschlossenen Position keine plastifizierte Schmelze aus dem Formraum ausdringen kann. Die Reinigungsstruktur ist daher durch den zumindest einen Entlüftungsspalt von dem Formraum getrennt. Der Entlüftungsspalt hat in der geschlossenen Position der Werkzeugelemente einen Querschnitt, der sicherstellt, dass nur Luft aus dem Formraum entweichen, aber keine Schmelze ausdringen kann.

In einer Ausführungsform sind benachbarte Abschnitte der zumindest zwei Werkzeugelemente in einer radialen Richtung um eine Längsachse des Spritzgießwerkzeuges derart hintereinander angeordnet, dass zwischen den zumindest zwei Werkzeugelementen ein Verteilerkanal ausgebildet ist, der sich zumindest abschnittsweise um die Längsachse des Spritzgießwerkzeuges erstreckt und einen Zuführungskanal der Reinigungsstruktur mit dem zumindest einen Entlüftungsspalt verbindet. Mit anderen Worten umschließt ein Abschnitt eines Werkzeugelementes einen Abschnitt des anderen Werkzeugelementes in Umfangsrichtung. Der Verteilerkanal muss dabei nicht zwangsläufig einen konstanten Querschnitt haben und in Umfangsrichtung auch nicht vollumlaufend ausgebildet sein. Vorzugsweise sind die benachbarten Abschnitte der Werkzeugelemente jedoch konzentrisch um die Längsachse angeordnet und/oder der Verteilerkanal ringförmig ausgestaltet. Durch den Verteilerkanal wird gewährleistet, dass das Reinigungsfluid möglichst gleichzeitig in die Entlüftungsspalten zwischen den Werkzeugelementen eindringen kann und eine entsprechende Strömungsdynamik entsteht, die dazu geeignet ist, die Schmutzpartikel besonders effektiv mitzureißen.

Werkzeugelemente im Sinne der vorliegenden Erfindung sind beispielsweise Kavitäteneinsätze einer Kavitätenplatte, Formkerne einer Kernplatte, Halsbacken eines Halsrings eines Spritzgießwerkzeuges, Stützringe oder Kernringe.

In einer Ausführungsform weist das Spritzgießwerkzeug daher als Werkzeugelemente einen Kavitäteneinsatz, einen Formkern mit einem Kernring, einen Halsring, und einen Stützring auf, wobei der Kernring einen hinteren Abschnitt des Formkerns entlang der Längsachse des Spritzgießwerkzeuges abschnittsweise umgibt, wobei der Stützring den Kernring und den hinteren Abschnitt des Formkerns abschnittsweise entlang der Längsachse umgibt, wobei der Halsring einen mittleren Abschnitt des Formkerns entlang der Längsachse umgibt, wobei ein vorderer Abschnitt des Formkerns in der geschlossenen Position in dem Kavitäteneinsatz angeordnet ist, sodass der Formraum von dem Kavitäteneinsatz, dem vorderen Abschnitt des Formkerns, dem Kernring und dem Halsring gebildet wird, wobei ein erster Entlüftungsspalt zwischen dem Kernring und dem Halsring ausgebildet wird, und ein dritter Entlüftungsspalt zwischen dem Halsring und dem Kavitäteneinsatz ausgebildet wird, wobei zwischen dem Halsring und dem Kernring ein Verteilerkanal der Reinigungsstruktur ausgebildet ist, wobei der Verteilerkanal an den ersten Entlüftungsspalt anschließt, sodass das Reinigungsfluid über den Verteilerkanal und den ersten Entlüftungsspalt in den Formraum leitbar ist oder umgekehrt, wobei vorzugsweise der Kernring und der Formkern als separate Werkzeugelemente ausgestaltet sind und ein zweiter Entlüftungsspalt zwischen dem Kernring und dem Formkern ausgebildet wird.

Kernring und Formkern können also in einer Ausführungsform einstückig ausgestaltet sein, sodass zwischen Kernring und Formkern kein Entlüftungsspalt ausgebildet ist oder der Formkern und der Kernring sind als separate Werkzeugelemente ausgebildet, sodass sich der zweite Entlüftungsspalt zwischen den beiden Werkzeugelementen ausbildet. Der zweite Entlüftungsspalt ist ebenfalls mit dem Formraum verbunden. In einer Ausführungsform kann der Halsring auch zweiteilig ausgestaltet sein und aus zwei zueinander beweglichen Halsbacken bestehen. Zwischen den Halsbacken ist dann ein vierter Entlüftungsspalt ausgebildet.

In einer weiteren Ausführungsform ist der Verteilerkanal über einen Hilfskanal mit dem zweiten Entlüftungsspalt verbunden, sodass das Reinigungsfluid über den Verteilerkanal, den ersten Entlüftungsspalt und den zweiten Entlüftungsspalt in den Formraum leitbar ist oder umgekehrt.

Insbesondere ist in einer Ausführungsform der Zuführungskanal für das Reinigungsfluid in dem Stützring ausgebildet, wobei vorzugsweise in einer Stirnfläche des Halsrings, die dem Stützring zugewandt ist, und/oder in einer Endfläche des Stützrings, die der Stirnfläche des Halsrings zugewandt ist, zumindest eine Vertiefung ausgebildet ist, die eine Verbindung zwischen dem Verteilerkanal und dem Zuführungskanal bildet. Die Vertiefung dient vor allem dazu, einen Fluidstrom des Reinigungsfluids, welches aus dem Zuführungskanal eingeleitet wird, in den Verteilerkanal zu führen. Hierzu muss die Vertiefung in der Stirnfläche bzw. der Endfläche nicht umlaufend ausgestaltet sein. Vielmehr ist es ausreichend, wenn ein oder zwei Vertiefungen als Taschen in der Stirnfläche des Halsrings und/oder der Endfläche des Stützrings ausgebildet sind, die an jeweils einen Zuführungskanal für das Reinigungsfluid anschließen.

In einer weiteren Ausführungsform ist zumindest ein Zuführungskanal der Reinigungsstruktur in dem Kavitäteneinsatz ausgebildet. Es versteht sich, dass der Zuführungskanal der Reinigungsstruktur ausschließlich in dem Kavitäteneinsatz ausgebildet sein kann oder zusätzlich zu einem Zuführungskanal über den Stützring oder den Formkern auch ein Zuführungskanal über den Kavitäteneinsatz vorgesehen sein kann. So kann das Reinigungsfluid beispielsweise von dem Zuführungskanal im Stützring oder Formkern über den Verteilerkanal und den zumindest einen Entlüftungsspalt zwischen Halsring und Kernring in den Formraum eindringen und über den dritten Entlüftungsspalt und den Zuführungskanal im Kavitäteneinsatz wieder ausgeleitet werden oder umgekehrt.

Insgesamt bestehen damit verschiedene Möglichkeiten die Zuführung des Reinigungsfluids in den Entlüftungsspalt und den Formraum zu realisieren. Die erfindungsgemäße Reinigungsstruktur ist damit unabhängig von dem verwendeten Werkzeugtyp. Insbesondere kann die Reinigung entweder durch das Zuführen von Reinigungsfluid in die Entlüftungsspalten erfolgen oder alternativ ist auch eine Absaugung von Schmutzpartikeln über die Reinigungsstruktur denkbar.

In einer weiteren Ausführungsform sind die Werkzeugelemente zusätzlich zu der offenen Position und der geschlossenen Position in einer Reinigungsposition anordenbar, wobei in der Reinigungsposition der zumindest eine Entlüftungsspalt zwischen den Werkzeugelementen kleiner ist als in der offenen Position und größer ist als in der geschlossenen Position, sodass zwischen den Werkzeugelementen ein erweiterter Formraum gebildet wird, wobei mit der Reinigungsstruktur das Reinigungsfluid in den erweiterten Formraum leitbar ist. Durch eine Vergrößerung des Entlüftungsspaltes zwischen den Werkzeugelementen kann das Reinigungsfluid besser zwischen die Werkzeugelemente eindringen und Schmutzpartikel damit effektiver mit sich reißen.

Insbesondere weist das Spritzgießwerkzeug in einer weiteren Ausführungsform als Werkzeugelemente einen Kavitäteneinsatz, einen Formkern und einen Halsring auf, wobei der Halsring den Formkern abschnittsweise entlang der Längsachse umgibt, wobei ein vorderer Abschnitt des Formkerns in der geschlossenen Position in dem Kavitäteneinsatz angeordnet ist, sodass der Formraum von dem Kavitäteneinsatz, dem vorderen Abschnitt des Formkerns und dem Halsring gebildet wird, wobei ein erster Entlüftungsspalt zwischen dem Halsring und einem hinteren Abschnitt des Formkern ausgebildet wird, der nicht einen Abschnitt des Formraums bildet, und ein zweiter Entlüftungsspalt zwischen dem Halsring und dem Kavitäteneinsatz ausgebildet wird, wobei der erste Entlüftungsspalt zwischen dem Halsring und dem hinteren Abschnitt des Formkerns als der Verteilerkanal der Reinigungsstruktur ausgebildet ist, wenn die Werkzeugelemente in der Reinigungsposition angeordnet sind, sodass das Reinigungsfluid über den ersten Entlüftungsspalt als Verteilerkanal in den erweiterten Formraum leitbar ist oder umgekehrt, wobei der Zuführungskanal vorzugsweise in dem hinteren Abschnitt des Formkerns ausgebildet ist

Die der Erfindung zugrunde liegende Aufgabe wird weiter durch ein Verfahren zur Reinigung eines Spritzgießwerkzeuges nach einer der zuvor beschriebenen Ausführungsformen gelöst, wobei das Verfahren die folgenden Schritte aufweist:
a. Anordnen der Werkzeugelemente in der geschlossenen Position,
b. Einspritzen einer Formmasse in den Formraum zur Ausbildung des Formteils,
c. Bewegen der Werkzeugelemente in die offene Position und Entnehmen des Formteils,
wobei während Schritt a. und/oder während Schritt c. über die Reinigungsstruktur ein Reinigungsfluidstoß in den zumindest einen Entlüftungsspalt initiiert wird.

Vorzugsweise ist vorgesehen, das Reinigungsfluid bereits zu dem Zeitpunkt zuzuführen, in welchem das Bewegen der Werkzeugelemente in die offene Position beginnt, d.h. wenn die Werkzeugelemente noch in der geschlossenen Position angeordnet sind, das Formteil jedoch ausreichend erstarrt ist, um entnommen zu werden. Die Reinigung erfolgt damit zeitlich mit der Entnahme des Formteils.

Durch das Zuführen des Reinigungsfluids noch während die Werkzeugelemente in der geschlossenen Position angeordnet sind, wird eine Strömungsdynamik des Reinigungsfluides erzielt, die besonders effektiv die Schmutzpartikel mitreißt. So wird zunächst ein entsprechender Druck des Reinigungsfluids in der Reinigungsstruktur aufgebaut, wenn die Werkzeugelemente zu Beginn des Schrittes c. noch in der nahezu geschlossenen Position angeordnet sind. Erfolgt dann vorzugsweise ein abruptes Auseinanderbewegen der Werkzeugelemente, entsteht ein Druckstoß aus der Reinigungsstruktur in den Entlüftungsspalt und den Formraum und damit weitere verbundene Entlüftungsspalten, welcher die Schmutzpartikel effektiv mitreißt.

In einer weiteren Ausführungsform werden die Werkzeugelementen nach dem Entnehmen des Formteils für eine bestimmte Dauer in einer Reinigungsposition angeordnet, in welcher die Werkzeugelemente einen Abstand aufweisen, der größer ist als ein Abstand der Werkzeugelemente in der geschlossenen Position und kleiner ist als ein Abstand der Werkzeugelemente in der offenen Position, wobei die Dauer vorzugsweise mindestens 0,1 Sekunden und höchstens 1,5 Sekunden beträgt. Mit anderen Worten werden die Werkzeugelemente des Spritzgießwerkzeuges für eine bestimmte Zeit in der Reinigungsposition angeordnet, die Bewegung von der offenen Position in die geschlossene Position wird also für eine bestimmte Zeit unterbrochen.

Durch die erfindungsgemäße Ausgestaltung des Reinigungsverfahrens und die damit verbundene gleichzeitige Reinigung mehrerer Entlüftungsspalten ist bereits eine sehr kurze Dauer in der Reinigungsposition ausreichend, um die Elemente des Spritzgießwerkzeuges zu reinigen. Damit wird weniger Reinigungsfluid verbraucht. Insbesondere bei einem Reinigungsfluid in Form von Druckluft können damit Kosten eingespart werden.

In einer weiteren Ausführungsform werden die Schritte a. bis c. in aufeinanderfolgenden Zyklen wiederholt und der Reinigungsfluidstoß erfolgt bei jedem Durchlauf des Schrittes a. und/oder c.. Innerhalb eines Herstellungszyklus können sich nur wenige Schmutzpartikel ansammeln, sodass ein entsprechend kurzer Reinigungsfluidstoß ausreichend ist. Gleichzeitig wird aufgrund der geringen Dauer der Reinigung das Herstellungsverfahren der Formteile nicht maßgeblich zeitlich beeinträchtigt.

In einer weiteren Ausführungsform unterstützt der Reinigungsfluidstoß das Entnehmen des Formteils. Insbesondere können bereits in dem Spritzgießwerkzeug vorhandene Strukturen für Ausblasluft genutzt werden, um die erfindungsgemäße Reinigung des Spritzgießwerkzeuges zu erzielen. So kann der Zuführungskanal der Entlüftungsstruktur beispielsweise gleichzeitig der ohnehin vorhandene Kanal für die Ausblasluft sein.

Es versteht sich, dass Ausführungsformen, die im Hinblick auf das Spritzgießwerkzeug beschrieben wurden, auch auf das Verfahren zur Reinigung des Spritzgießwerkzeuges übertragbar sind und umgekehrt.

Weitere Vorteile, Merkmale und Anwendungsmöglichkeiten der vorliegenden Erfindung werden anhand der folgenden Beschreibung verschiedener Ausführungsformen verdeutlicht. Gleiche Bauteile sind dabei mit gleichem Bezugszeichen bezeichnet.
- Figur 1: zeigt einen schematischen Querschnitt durch eine erste Ausführungsform des erfindungsgemäßen Spritzgießwerkzeuges in der Reinigungsposition.
- Figur 2: zeigt eine Vergrößerung der in Figur 1 dargestellten ersten Ausführungsform in der geschlossenen Position.
- Figur 3: zeigt eine weitere Vergrößerung der in Figur 2 dargestellten ersten Ausführungsform.
- Figur 4: zeigt die in Figur 2 dargestellte erste Ausführungsform in einer Reinigungsposition.
- Figur 5: zeigt einen Ausschnitt eines schematischen Querschnitts durch eine zweite Ausführungsform des erfindungsgemäßen Spritzgießwerkzeuges in der geschlossenen Position.
- Figur 6: zeigt einen Ausschnitt eines schematischen Querschnitts durch eine dritte Ausführungsform des erfindungsgemäßen Spritzgießwerkzeuges.
- Figur 7: zeigt einen schematischen Querschnitt durch eine vierte Ausführungsform des erfindungsgemäßen Spritzgießwerkzeuges in der Reinigungsposition.
- Figur 8: zeigt einen schematischen Querschnitt durch eine fünfte Ausführungsform des erfindungsgemäßen Spritzgießwerkzeuges in der Reinigungsposition.
- Figur 9: zeigt eine Vergrößerung der in Figur 7 dargestellten fünften Ausführungsform.
- Figur 10a: zeigt einen schematischen Querschnitt durch die erste Ausführungsform des erfindungsgemäßen Spritzgießwerkzeuges in der geschlossenen Position.
- Figur 10b: zeigt einen schematischen Querschnitt durch die erste Ausführungsform des erfindungsgemäßen Spritzgießwerkzeuges in der Reinigungsposition.
- Figur 10c: zeigt einen schematischen Querschnitt durch eine erste Ausführungsform des erfindungsgemäßen Spritzgießwerkzeuges in der offenen Position.
- Figur 11: zeigt ein Ablaufdiagramm für eine Ausführungsform des erfindungsgemäßen Verfahrens.

Allen gezeigten Ausführungsformen ist gemein, dass sie als Werkzeugelemente einen Formkern 4 sowie einen Halsring 3 und einen Kavitäteneinsatz 6 aufweisen. Der Formkern 4 ist auf einer Kernplatte (nicht dargestellt) angeordnet und verfügt über einen vorderen Abschnitt 4a, der eine Innenkontur des herzustellen Formteils bildet und dem Formraum 2 abschnittsweise begrenzt. Der Formraum 2 wird weiter durch den Halsring 3 begrenzt, der z.B. aus zwei Halsbacken bestehen kann.

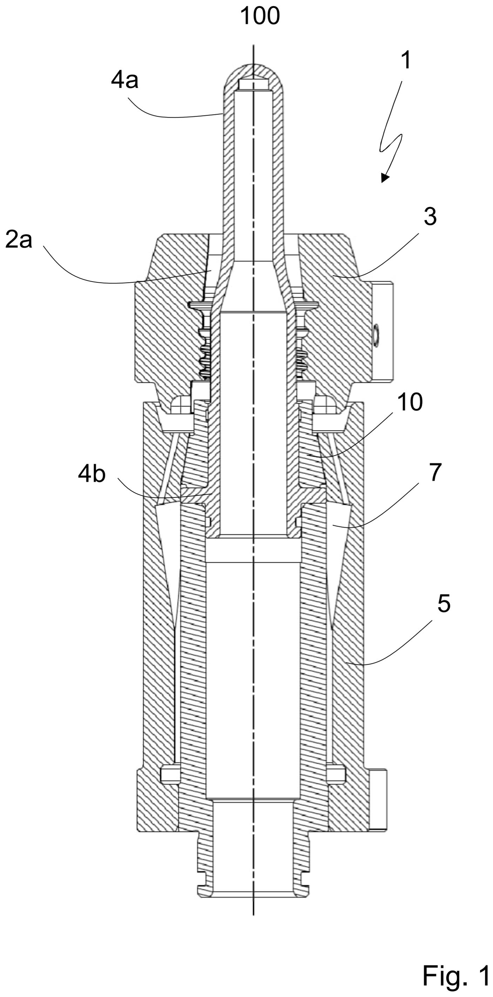

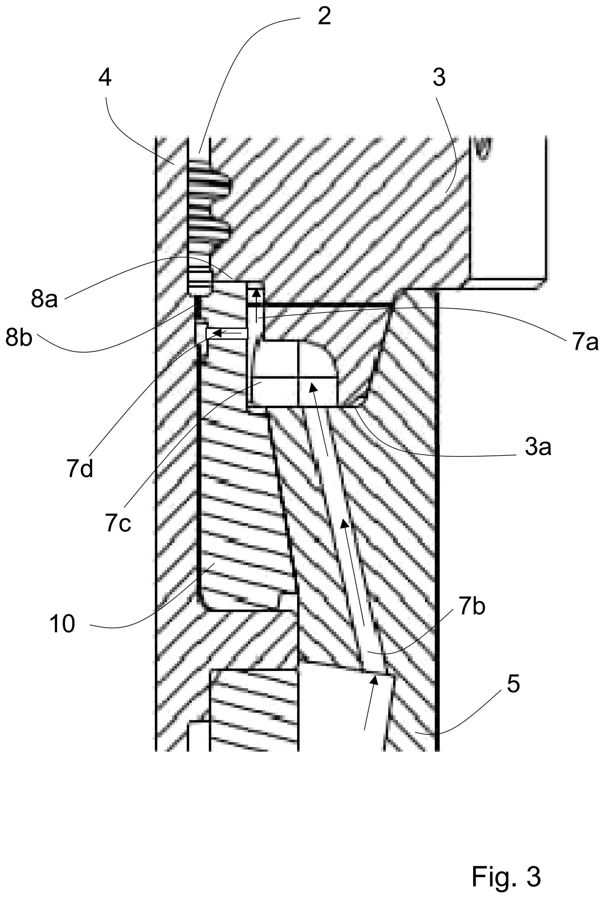

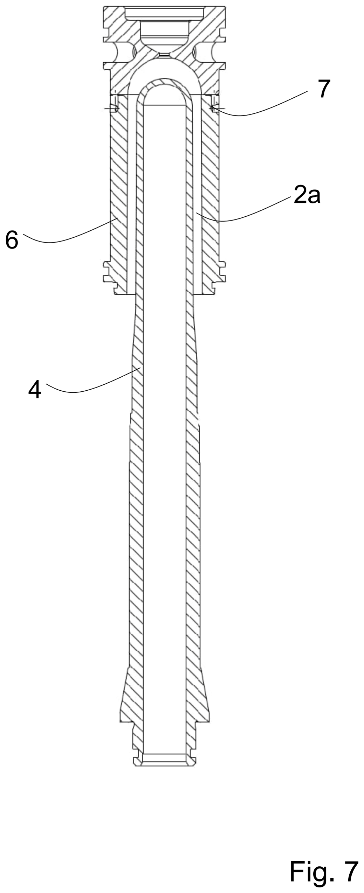

In den gezeigten Ausführungsformen bildet eine Innenkontur des Halsrings 3 beispielsweise einen Gewindeabschnitt des herzustellenden Formteils. Darüber hinaus ist in allen Ausführungsformen ein Kavitäteneinsatz 6 vorgesehen, in welchem der vordere Abschnitt 4a des Formkerns 4 in der geschlossenen Position angeordnet ist (siehe Figur 7) und welcher eine Außenkontur des herzustellen Formteils definiert. In den Figuren 1 bis 5 sowie 7 bis 10 wurde der Kavitäteneinsatz 6 nur der Übersichtlichkeit halber weggelassen.

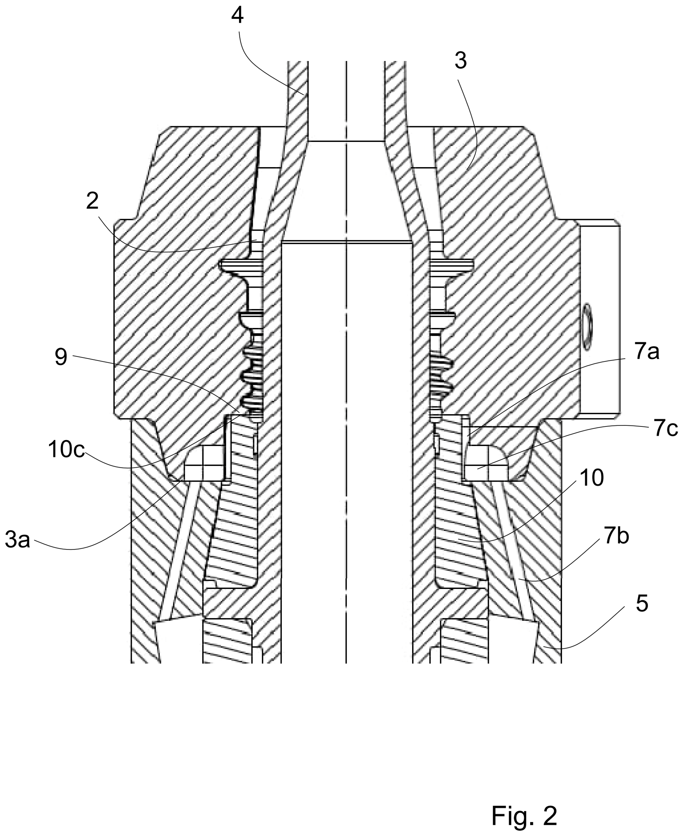

Der Kavitäteneinsatz 6, der vordere Abschnitt 4a des Formkerns 4 sowie der Halsring 3 bilden in den gezeigten Ausführungsformen in der geschlossenen Position einen Formraum 2 (siehe Figuren 2, 3, 5 und 10a) und in der Reinigungsposition einen erweiterten Formraum 2a (siehe Figuren 1, 6, 7, 8, 9, 10b), wobei sich der Formraum 2 von dem erweiterten Formraum 2a vor allem darin unterscheidet, dass ein Abstand zwischen den Werkzeugelementen so klein ist, dass keine plastifizierte Schmelze aus dem Formraum 2 ausdringen kann.

Bei der in den Figuren 1 bis 4 sowie 10a bis 10c gezeigten ersten Ausführungsform ist ein hinterer Abschnitt 4b des Formkerns 4 zusätzlich von einem separaten Kernring 10 und von einem Stützring 5 umgeben, wobei eine Stirnfläche 10c des Kernrings 10 den Formraum 2 in Richtung der Kernplatte ebenfalls begrenzt. Der Stützring 5 dient der Befestigung des Formkerns 4 an der Kernplatte. In dem Stützring 5 ist ein Zuführungskanal 7b einer Reinigungsstruktur 7 vorgesehen, die sich weiter aus einem Verteilerkanal 7a und einer taschenförmigen Vertiefung 7c zusammensetzt. Der Verteilerkanal 7a ist als Ringkanal zwischen den konzentrisch um die Längsachse 100 angeordnetem Kernring 10 und dem Halsring 3 angeordnet und schließt unmittelbar an einen ersten Entlüftungsspalt 8a zwischen dem Halsring 3 und der Stirnfläche 10c des Kernrings 10an. Weiter ist der ringförmige Verteilerkanal 7a über einen Hilfskanal 7d mit einem zweiten Entlüftungsspalt 8b zwischen dem Formkern 4 und dem Kernring 10 verbunden. Die taschenförmige Vertiefung 7c ist in einer Stirnfläche 3a des Halsrings 3 angeordnet, die der Kernplatte zugewandt ist und bildet eine Verbindung zwischen dem Verteilerkanal 7a und Zuführungskanal 7b.

Befindet sich das Spritzgießwerkzeug 1 in der geschlossenen Position, wie in den Figuren 2, 3 und 10a dargestellt, ist ein Vorsprung 9 des Halsrings 3 in Kontakt mit der Stirnfläche 10c des Kernrings 10. Hierdurch wird der Formraum 2 in der geschlossenen Position in Richtung der Kernplatte begrenzt, sodass keine plastifizierte Schmelze aus dem Formraum 2 ausdringen kann. Der erste Entlüftungsspalt 8a ist zwischen dem Vorsprung 9 und der Stirnfläche 10cangeordnet.

Um die Entlüftungsspalten 8a und 8b gleichzeitig zu reinigen, wird vorzugsweise noch in der geschlossenen Position Reinigungsfluid, z.B. Druckluft, über den Zuführungskanal 7b zunächst in die taschenförmige Vertiefung 7c geleitet und von dort aus über den ringförmigen Verteilerkanal 7a in den ersten Entlüftungsspalt 8a bzw. zusätzlich über den Hilfskanal 7d in den zweiten Entlüftungsspalt 8b. Hierdurch werden Schmutzpartikel aus den Entlüftungsspalten 8a und 8b mitgerissen und über den Formraum und weitere Entlüftungsspalten zwischen dem Halsring 3 und dem Kavitäteneinsatz 6 oder einen Zuführungskanal im Kavitäteneinsatz 6 wieder ausgeleitet.

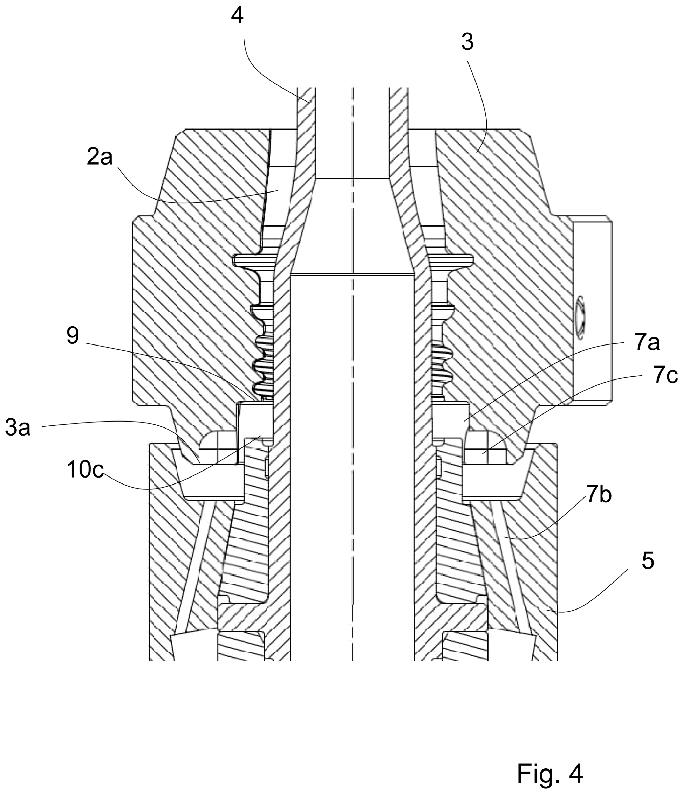

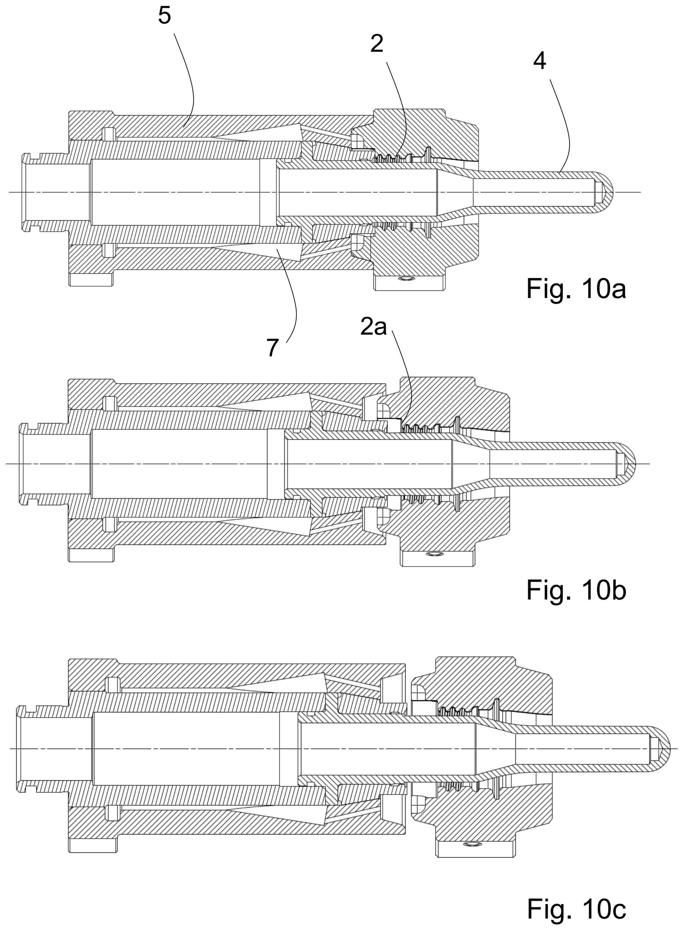

Werden der Halsring 3 und der Formkern 4 in Richtung der offenen Position auseinanderbewegt (siehe Figuren 4, 10b und 10c), wird der Verteilerkanal 7a entlang des Kernrings 10 derart in Richtung der Längsachse 100 bewegt, dass durch den Verteilerkanal 7a und die Vertiefung 7c eine vergrößerte Verbindung zwischen dem Zuführungskanal 7b und dem erweiterten Formraum 2a entsteht. Sind die Werkzeugelemente 3, 4, 5, 6 und 10 weiter voneinander beabstandet als in der geschlossenen Position, wird auch von einem erweiterten Formraum 2a gesprochen, da das Volumen des erweiterten Formraums 2a aufgrund der größeren Abstände der Werkzeugelemente 3, 4, 5, 6 und 10 größer ist als in der geschlossenen Position.

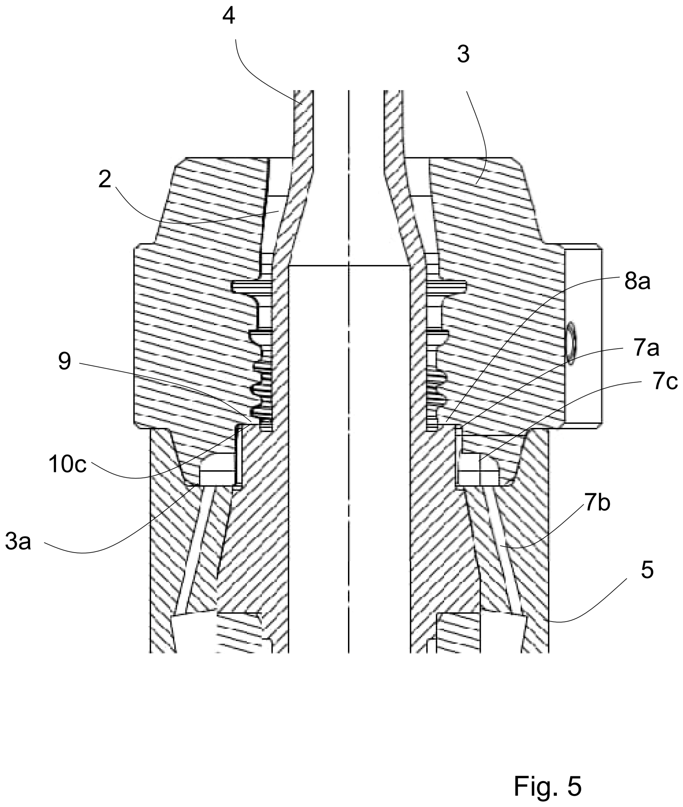

Die in Figur 5 dargestellte zweite Ausführungsform entspricht im Wesentlichen der ersten Ausführungsform, wobei der Kernring 10 und der Formkern 4 einstückig ausgebildet sind, sodass zwischen dem Kernring 10 und dem Formkern 4 kein zweiter Entlüftungsspalt vorhanden ist. Das Reinigungsfluid gelangt bei dieser Ausführungsform also durch den Zuführungskanal 7b zunächst in die taschenförmige Vertiefung 7c und wird von dort aus über den ringförmigen Verteilerkanal 7a in den ersten Entlüftungsspalt 8a zwischen Kernring 10 des Formkerns 4 und Halsring 3 geleitet.

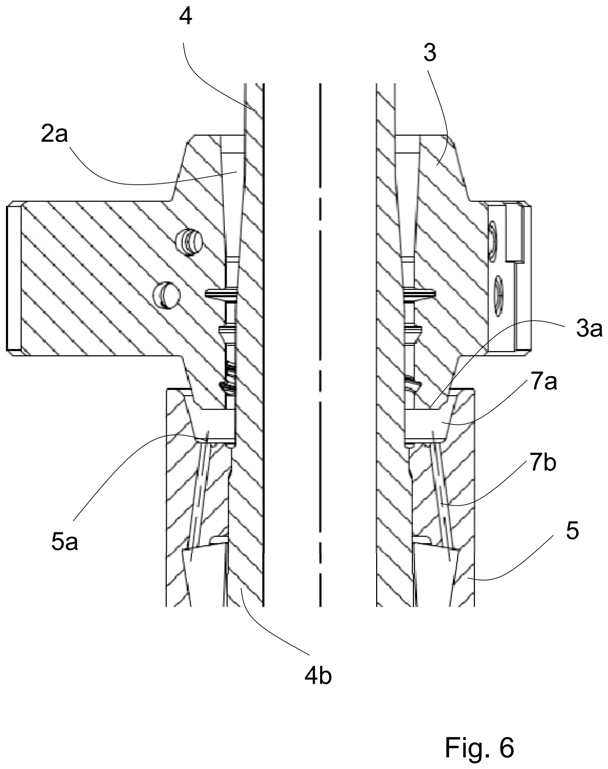

Die in Figur 6 dargestellte dritte Ausführungsform unterscheidet sich von der ersten und zweiten Ausführungsform darin, dass in der Stirnfläche 3a des Halsrings 3 keine Vertiefung vorgesehen ist. Die Reinigungsstruktur 7, die ebenfalls im Stützring 5 vorgesehen ist, trifft damit unmittelbar auf die Stirnfläche 3a des Halsrings 3. So wird sichergestellt, dass keine plastifizierte Schmelze in die Reinigungsstruktur 7 eindringen kann, wenn die Werkzeugelemente 3, 4, 5 und 6 in der geschlossenen Position angeordnet sind, also die Stirnfläche 3a des Halsrings 3 in direktem Kontakt mit einer Endfläche 5a des Stützrings 5 steht. Die Endfläche 5a des Stützrings 5 ist dabei vorzugsweise wie in Figur 5 dargestellt, mit einer Vertiefung versehen, in welche ein Vorsprung des Halsrings 3, der die Stirnfläche 3a aufweist, in der geschlossenen Position und auch in der Reinigungsposition eingreift. In der Reinigungsposition, die in Figur 5 dargestellt ist, ist der Halsring 3 jedoch bereits ein Stück weit entlang der Längsachse 100 von dem hinteren Abschnitt 4b des Formkerns 4 sowie dem Stützring 5 wegbewegt, wodurch sich der Entlüftungsspalt zwischen der Stirnfläche 3a des Halsrings und der Endfläche 5a des Stützrings 5 als ein ringförmiger Verteilerkanal 7a ausbildet, über welchen das Reinigungsfluid durch den Zuführungskanal 7b in den erweiterten Formraum 2a geleitet wird.

Bei der in Figur 7 gezeigten vierten Ausführungsform ist die Luftzuführung 7 in einem Kavitäteneinsatz 6 vorgesehen. Die übrige Ausgestaltung des Formkerns 4, des Stützrings 5, sowie des Halsrings 3 kann genauso vorgesehen sein, wie bei den zuvor diskutierten Ausführungsformen.

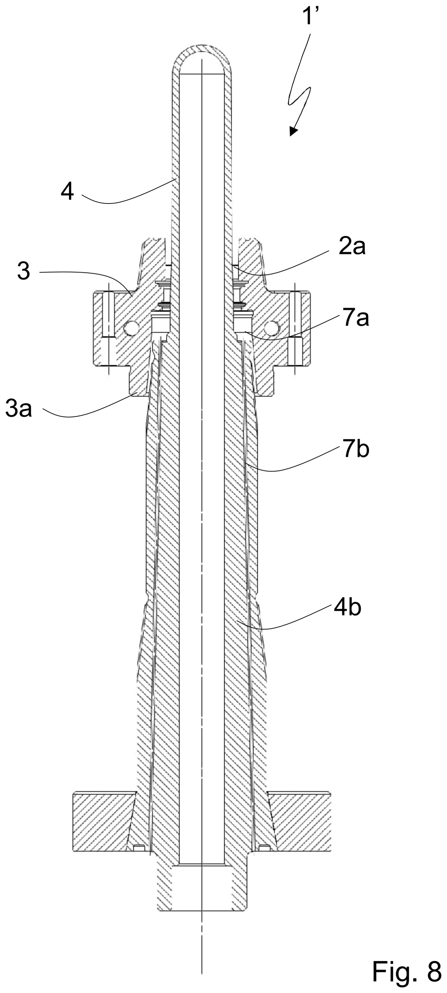

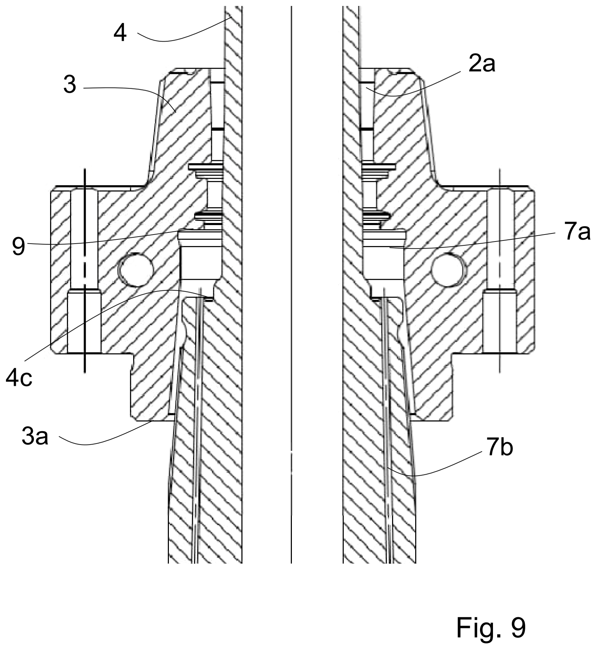

Die in den Figuren 8 und 9 gezeigte fünfte Ausführungsform unterscheidet sich von den übrigen Ausführungsformen vor allem darin, dass der Zuführungskanal 7b der Reinigungsstruktur 7 in dem hinteren Abschnitt 4b des Formkerns 4 vorgesehen ist und nicht in einem Stützring 5. Auch bei dieser Ausführungsform weist der Halsring 3 in der Durchführung für den Formkern 4 einen Vorsprung 9 auf, welcher in der geschlossenen Position in Kontakt mit einem Schulterabschnitt 4c des Formkerns gebracht wird, um den Formraum 2 in Richtung der Kernpatte abzuschließen und sicherzustellen, dass keine plastifizierte Schmelze in die Reinigungsstruktur 7 eindringen kann. Der Zuführungskanal 7b der Reinigungsstruktur 7 hat dabei eine Öffnung in dem Schulterabschnitt 4c und führt damit Reinigungsfluid in einen Verteilerkanal 7a, der ebenfalls ringförmig um die Längsachse 100 ausgebildet ist und entsteht, sobald die Werkzeugelemente 3 und 4 in Richtung der offenen Position bewegt werden. Über den Verteilerkanal 7a wird das Reinigungsfluid dann in den erweiterten Formraum 2a geleitet.

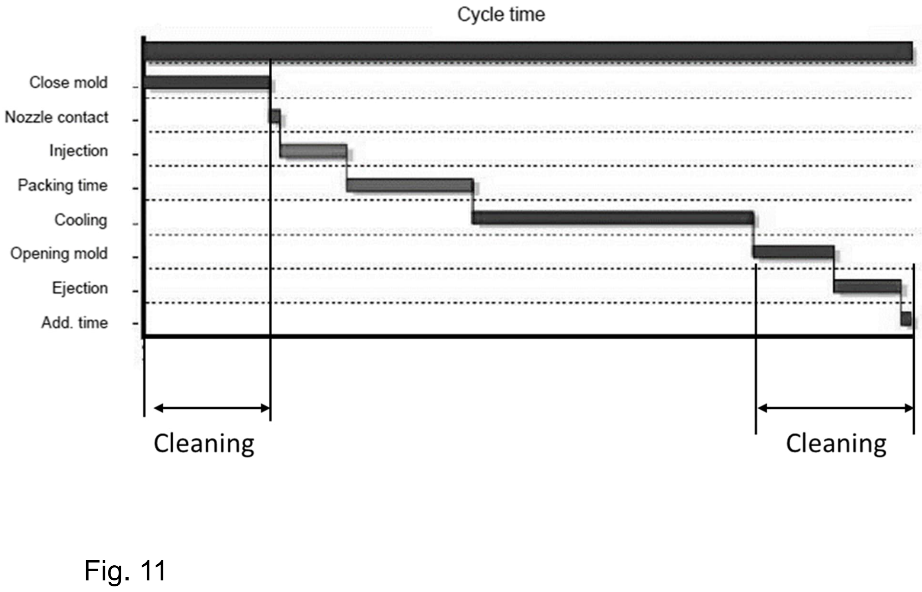

In den Figuren 10a - 10c, sowie Figur 11 ist ein Ablauf des erfindungsgemäßen Verfahrens dargestellt. Auch wenn der Ablauf des Verfahrens anhand der ersten Ausführungsform beschrieben wird, versteht sich, dass der Ablauf des Verfahrens auch unmittelbar auf die anderen Ausführungsformen angewendet werden kann.

Zunächst befindet sich das Spritzgießwerkzeug 1 in der geschlossenen Position, die in Figur 10a dargestellt ist. In diesem Fall ist die Stirnfläche 10c des Kernrings 10 in Eingriff mit dem Vorsprung 9 des Halsrings 3. In diesem Zustand wird die plastifizierte Schmelze in den Formraum 2 eingeleitet. Durch die zwischen den Werkzeugelementen 3, 4, 5, 6 und 10 gebildeten Entlüftungsspalten kann Luft aus dem Formraum 2 entweichen, sodass der Formraum 2 entlüftet wird und sich die plastifizierte Schmelze gleichmäßig im Formraum 2 verteilen kann.

Sobald das Formteil im Formraum 2 ausreichend erstarrt ist, wird das Reinigungsverfahren eingeleitet, wozu Reinigungsfluid, vorzugsweise Druckluft, durch den Zuführungskanal 7b und den ringförmigen Verteilerkanal 7a der Reinigungsstruktur 7 zugeführt wird. Vorzugsweise ist vorgesehen, dass der Reinigungsprozess gestartet wird, wenn sich die Werkzeugelemente 3, 4, 5, 6 und 10 noch in der geschlossenen Position befinden bzw. die Reinigung gleichzeitig mit dem Auseinanderbewegen der Werkzeugelemente 3, 4, 5, 6 und 10 erfolgt.

In einem nächsten Schritt wird das Formteil aus dem Spritzgießwerkzeug 1 entnommen, indem die Werkzeugelemente 3, 4, 5 und 10 in die in Figur 10c dargestellte offenen Position auseinanderfahren. Das Entnehmen des Formteils wird durch den Druck des Reinigungsfluids, welches durch die Reinigungsstruktur 7 in den Formraum 2 geleitet wird, unterstützt.

Nachdem das Formteil entnommen wurde, werden die Werkzeugelemente 3, 4, 5 und 10 nochmals für eine bestimmte Dauer in der in Figur 10b dargestellten Reinigungsposition angeordnet und der dort gebildete erweiterte Formraum 2a weiter mit Reinigungsfluid beaufschlagt. Anschließend werden die Werkzeugelemente 3, 4, 5 und 10 wieder in die geschlossene Position gebracht und ein neuer Spritzgießvorgang gestartet.

Auf diese Weise kann nach jedem Spritzgießzyklus eine kurze Reinigung der Entlüftungsspalten zwischen den Werkzeugelementen 3, 4, 5, 6 und 10 erfolgen, sodass sich das Werkzeug 1, 1' nicht maßgeblich mit Schmutzpartikeln zusetzt.

### Bezugszeichen

- 1, 1': Spritzgießwerkzeug
- 2: Formraum
- 2a: erweiterter Formraum
- 3: Halsring
- 3a: Stirnfläche
- 4: Formkern
- 4a: vorderer Abschnitt
- 4b: hinterer Abschnitt
- 4c: Schulterabschnitt des Formkerns
- 5: Stützring
- 5a: Endfläche
- 6: Kavitäteneinsatz
- 7: Reinigungsstruktur
- 7a: Verteilerkanal
- 7b: Zuführungskanal
- 7c: Vertiefung
- 7d: Hilfskanal
- 8a: erster Entlüftungsspalt
- 8b: zweiter Entlüftungsspalt
- 9: Vorsprung
- 10: Kernring
- 10c: Stirnfläche des Kernrings
- 100: Längsachse

## Patentansprüche

1. Spritzgießwerkzeug (1) zur Herstellung zumindest eines Formteils in einem Formraum (2), wobei das Spritzgießwerkzeug (1) zumindest zwei Werkzeugelemente (3, 4, 5, 6, 10) aufweist, die relativ zueinander zwischen einer offenen Position und einer geschlossenen Position bewegbar sind und unter Ausbildung zumindest eines Entlüftungsspaltes miteinander in Kontakt stehen, wobei in der geschlossenen Position von den zumindest zwei Werkzeugelementen (3, 4, 5, 6, 10) der Formraum (2) zumindest abschnittsweise umschlossen wird und der Entlüftungsspalt derart mit dem Formraum verbunden ist und einen Querschnitt aufweist, dass der Entlüftungsspalt eine Entlüftung des Formraums (2) ermöglicht und ein Ausdringen einer plastifizierten Schmelze aus dem Formraum (2) verhindert, und wobei in der offenen Position ein in dem Formraum (2) hergestelltes Formteil aus dem Spritzgießwerkzeug (1) entnommen werden kann, **dadurch gekennzeichnet, dass** das Spritzgießwerkzeug (1) weiter eine Reinigungsstruktur (7) aufweist, wobei die Reinigungsstruktur (7) derart angeordnet und ausgebildet ist, dass über die Reinigungsstruktur (7) ein Reinigungsfluid, vorzugsweise Druckluft, in den zumindest einen Entlüftungsspalt zwischen den Werkzeugelementen (3, 4, 5, 6, 10) leitbar ist.

2. Spritzgießwerkzeug nach Anspruch 1, wobei benachbarte Abschnitte der zumindest zwei Werkzeugelemente in einer radialen Richtung um eine Längsachse des Spritzgießwerkzeuges derart hintereinander angeordnet sind, dass zwischen den zumindest zwei Werkzeugelementen ein Verteilerkanal ausgebildet ist, der sich zumindest abschnittsweise, vorzugsweise ringförmig, um die Längsachse des Spritzgießwerkzeuges erstreckt und einen Zuführungskanal der Reinigungsstruktur mit dem zumindest einen Entlüftungsspalt verbindet.

3. Spritzgießwerkzeug (1) nach einem der vorhergehenden Ansprüche, wobei das Spritzgießwerkzeug (1) als Werkzeugelemente (3, 4, 5, 6, 10) einen Kavitäteneinsatz, einen Formkern mit einem Kernring (10), einen Halsring und einen Stützring aufweist, wobei der Kernring einen hinteren Abschnitt des Formkerns entlang der Längsachse (100) des Spritzgießwerkzeuges (1) abschnittsweise umgibt, wobei der Stützring den Kernring und den hinteren Abschnitt des Formkerns abschnittsweise entlang der Längsachse umgibt, wobei der Halsring einen mittleren Abschnitt des Formkerns entlang der Längsachse umgibt, wobei ein vorderer Abschnitt des Formkerns in der geschlossenen Position in dem Kavitäteneinsatz angeordnet ist, sodass der Formraum von dem Kavitäteneinsatz, dem vorderen Abschnitt des Formkerns, dem Kernring und dem Halsring gebildet wird, wobei ein erster Entlüftungsspalt (8a) zwischen dem Kernring (10) und dem Halsring (3) ausgebildet wird, und ein dritter Entlüftungsspalt zwischen dem Halsring und dem Kavitäteneinsatz ausgebildet wird, wobei zwischen dem Halsring (3) und dem Kernring ein Verteilerkanal der Reinigungsstruktur ausgebildet ist, wobei der Verteilerkanal an den ersten Entlüftungsspalt anschließt, sodass das Reinigungsfluid über den Verteilerkanal und den ersten Entlüftungsspalt in den Formraum leitbar ist oder umgekehrt, wobei vorzugsweise der Kernring (10) und der Formkern als separate Werkzeugelemente ausgestaltet sind und ein zweiter Entlüftungsspalt zwischen dem Kernring und dem Formkern ausgebildet wird.

4. Spritzgießwerkzeug nach Anspruch 3, wobei der Verteilerkanal über einen Hilfskanal mit dem zweiten Entlüftungsspalt verbunden ist, sodass das Reinigungsfluid über den Verteilerkanal, den ersten Entlüftungsspalt und den zweiten Entlüftungsspalt in den Formraum leitbar ist oder umgekehrt.

5. Spritzgießwerkzeug (1) nach einem der Ansprüche 3 oder 4, wobei der Zuführungskanal für das Reinigungsfluid in dem Stützring (5) ausgebildet ist, wobei vorzugsweise in einer Stirnfläche des Halsrings, die dem Stützring zugewandt ist, und/oder in einer Endfläche des Stützrings (5), die der Stirnfläche des Halsrings zugewandt ist, zumindest eine Vertiefung ausgebildet ist, die eine Verbindung zwischen dem Verteilerkanal und dem Zuführungskanal bildet.

6. Spritzgießwerkzeug (1) nach einem der Ansprüche 2 bis 5, wobei zumindest ein Zuführungskanal der Reinigungsstruktur (7) in dem Kavitäteneinsatz (6) ausgebildet ist, sodass das Reinigungsfluid über den Zuführungskanal in den Formraum leitbar ist und von dem Formraum in den ersten, zweiten und dritten Entlüftungsspalt oder umgekehrt.

7. Spritzgießwerkzeug (1) nach einem der vorhergehenden Ansprüche, wobei die Werkzeugelemente (3, 4, 5, 6, 10) zusätzlich zu der offenen Position und der geschlossenen Position in einer Reinigungsposition anordenbar sind, wobei in der Reinigungsposition der zumindest eine Entlüftungsspalt zwischen den Werkzeugelementen (3, 4, 5, 6, 10) kleiner ist als in der offenen Position und größer ist als in der geschlossenen Position, sodass zwischen den Werkzeugelementen (3, 4, 5, 6, 10) ein erweiterter Formraum (2a) gebildet wird, wobei mit der Reinigungsstruktur (7) das Reinigungsfluid in den erweiterten Formraum (2a) leitbar ist.

8. Spritzgießwerkzeug (1) nach Anspruch 7 soweit abhängig von Anspruch 2, wobei das Spritzgießwerkzeug (1) als Werkzeugelemente (3, 4, 6) einen Kavitäteneinsatz (6), einen Formkern (4) und einen Halsring (3) aufweist, wobei der Halsring den Formkern abschnittsweise entlang der Längsachse umgibt, wobei ein vorderer Abschnitt des Formkerns in der geschlossenen Position in dem Kavitäteneinsatz angeordnet ist, sodass der Formraum von dem Kavitäteneinsatz, dem vorderen Abschnitt des Formkerns und dem Halsring gebildet wird, wobei ein erster Entlüftungsspalt zwischen dem Halsring und einem hinteren Abschnitt des Formkern ausgebildet wird, der nicht einen Abschnitt des Formraums bildet, und ein zweiter Entlüftungsspalt zwischen dem Halsring und dem Kavitäteneinsatz ausgebildet wird, wobei der erste Entlüftungsspalt zwischen dem Halsring (3) und dem hinteren Abschnitt des Formkerns als der Verteilerkanal der Reinigungsstruktur ausgebildet ist, wenn die Werkzeugelemente in der Reinigungsposition angeordnet sind, sodass das Reinigungsfluid über den ersten Entlüftungsspalt als Verteilerkanal in den erweiterten Formraum (2a) leitbar ist oder umgekehrt, wobei der Zuführungskanal vorzugsweise in dem hinteren Abschnitt (4b) des Formkerns (4) ausgebildet ist.

9. Verfahren zur Reinigung eines Spritzgießwerkzeuges (1) nach einem der vorhergehenden Ansprüche, wobei das Verfahren die folgenden Schritte aufweist:
a. Anordnen der Werkzeugelemente (3, 4, 5, 6, 10) in der geschlossenen Position,
b. Einspritzen einer Formmasse in den Formraum (2) zur Ausbildung des Formteils,
c. Bewegen der Werkzeugelemente (3, 4, 5, 6, 10) in die offene Position und Entnehmen des Formteils,
wobei während Schritt a. und/oder während Schritt c. über die Reinigungsstruktur (7) ein Reinigungsfluidstoß in den zumindest einen Entlüftungsspalt initiiert wird.

10. Verfahren nach Anspruch 9, wobei die Werkzeugelemente (3, 4, 5, 6, 10) nach dem Entnehmen des Formteils für eine bestimmte Dauer in einer Reinigungsposition angeordnet werden, in welcher die Werkzeugelemente (3, 4, 5, 6, 10) einen Abstand aufweisen, der größer ist als ein Abstand der Werkzeugelemente (3, 4, 5, 6, 10) in der geschlossenen Position und kleiner ist als ein Abstand der Werkzeugelemente (3, 4, 5, 6, 10) in der offenen Position, wobei die Dauer vorzugsweise mindestens 0,1 Sekunden und höchstens 1,5 Sekunden beträgt.

11. Verfahren nach einem der Ansprüche 9 oder 10, wobei die Schritte a. bis c.. in aufeinanderfolgenden Zyklen wiederholt werden und der Reinigungsfluidstoß bei jedem Durchlauf des Schrittes a. und/oder c. erfolgt.

12. Verfahren nach einem der Ansprüche 9 bis 11, wobei der Reinigungsfluidstoß das Entnehmen des Formteils unterstützt.

13. Verfahren nach einem der Ansprüche 9 bis 12, wobei ein Spritzgießwerkzeug nach einem der Ansprüche 2 bis 8 bereitgestellt wird und mit einem Reinigungsfluidstoß mehrere, vorzugsweise alle, Entlüftungsspalten gleichzeitig gereinigt werden.
